(19) Europäisches Patentamt
European Patent Office
Office européen des brevets

(11) **EP 3 509 918 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **17754702.3**

(22) Anmeldetag: **16.08.2017**

(51) Int Cl.:
**B60T 8/1755** (2006.01)       **B60W 50/14** (2020.01)

(86) Internationale Anmeldenummer:
**PCT/EP2017/070756**

(87) Internationale Veröffentlichungsnummer:
**WO 2018/046263 (15.03.2018 Gazette 2018/11)**

(54) **VORRICHTUNG ZUM WARNEN EINES FAHRZEUGFÜHRERS EINES FAHRZEUGS VOR EINEM STATIONÄREN OBJEKT SOWIE FAHRZEUG MIT EINER SOLCHEN VORRICHTUNG**

APPARATUS FOR WARNING A DRIVER OF A VEHICLE ABOUT A STATIONARY OBJECT AND VEHICLE HAVING SUCH AN APPARATUS

DISPOSITIF POUR AVERTIR LE CONDUCTEUR D'UN VÉHICULE DE LA PRÉSENCE D'UN OBJET IMMOBILE AINSI QUE VÉHICULE ÉQUIPÉ D'UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2016 DE 102016116964**

(43) Veröffentlichungstag der Anmeldung:
**17.07.2019 Patentblatt 2019/29**

(73) Patentinhaber: **KNORR-BREMSE Systeme für Nutzfahrzeuge GmbH 80809 München (DE)**

(72) Erfinder:
• **NOHL, Andreas 71126 Gäufelden (DE)**
• **GÜCKER, Ulrich 71701 Schwieberdingen (DE)**
• **BANSPACH, Jochen 74921 Helmstadt-Bargen (DE)**

(56) Entgegenhaltungen:
EP-A2- 1 533 776          DE-A1- 19 654 538
DE-A1-102010 023 164      DE-A1-102010 048 144
DE-A1-102013 020 733      US-A1- 2012 035 846

**Beschreibung**

Die Erfindung betrifft eine Vorrichtung zum Warnen eines Fahrzeugführers eines Fahrzeugs vor einem stationären Objekt gemäß dem Oberbegriff von Anspruch 1 sowie ein Fahrzeug mit einer solchen Vorrichtung gemäß Anspruch 11.

Bei solchen Warnvorrichtungen ist es wünschenswert, dass vor den von der Sensoreinrichtung erfassten Objekten nur dann gewarnt wird, wenn dies angesichts der Fahrsituation auch tatsächlich angemessen ist, weil ansonsten aufgrund einer unnötig häufigen Erzeugung von Warnsignalen die Akzeptanz der Vorrichtung beim Fahrer verringert wird.

Eine gattungsgemäße Vorrichtung ist beispielsweise aus DE 10 2009 041 555 A1 bekannt. Dort wird eine dynamische Reichweitenbegrenzung des Erfassungsbereichs für einen Abbiegeassistenten und einen Totwinkelassistenten beschrieben. Insbesondere wird dort ein sich abhängig von der Geschwindigkeit des Fahrzeugs in Richtung senkrecht zu einer Fahrzeugseite gesehen dynamisch verändernder, seitlicher und rechteckförmiger Warnbereich beschrieben. Der dynamische seitliche Warnbereich erstreckt sich zwischen einem von Null verschiedenen seitlichen Minimalabstand (0,4 Meter) und einem Maximalabstand (2,5 Meter) vom Fahrzeug. Wenn das Fahrzeug abbiegt, so werden ein zukünftiger Fahrkorridor sowie eine Schleppkurve des Fahrzeugs geschätzt. Ein Warnsignal vor stehenden Objekten wird nur dann erzeugt, wenn sich ein stehendes Objekt im Fahrkorridor inklusive der Schleppkurve des Fahrzeugs befindet. Aus der Druckschrift geht nicht im Einzelnen hervor, auf welche Weise der Fahrkorridor inklusive der Schleppkurve des Fahrzeugs geschätzt werden.

Ein weiteres Beispiel einer gattungsgemäßen Vorrichtung ist aus EP 1 533 776 A2 bekannt.

Der vorliegenden Erfindung liegt demgegenüber die Aufgabe zugrunde, eine Vorrichtung der oben beschriebenen Art derart weiter zu entwickeln, dass keine unnötigen Warnsignale erzeugt werden. Weiterhin soll auch ein Fahrzeug mit einer solchen Vorrichtung zur Verfügung gestellt werden.

Gemäß der Erfindung wird diese Aufgabe durch die Merkmale der Ansprüche 1 und 11 gelöst.

Offenbarung der Erfindung

Die Erfindung geht von einer Vorrichtung zum Warnen eines Fahrzeugführers eines Fahrzeugs oder Fahrzeugzugs vor einem stationären Objekt aus, welches wenigstens folgendes beinhaltet:

a) Eine Sensoreinrichtung mit einem Erfassungsbereich, welcher einen seitlich von einer Fahrzeugseite angeordneten und in Richtung einer Längsmittelachse des Fahrzeugs oder des Fahrzeugzugs gesehen sich von einer Fahrzeugfront bis zu einem Fahrzeugheck erstreckenden Seitenerfassungsbereich umfasst, wobei die Sensoreinrichtung ausgebildet ist, dass sie ein stationäres Objekt innerhalb des Erfassungsbereichs erfassen kann,
b) eine mit der Sensoreinrichtung zusammen wirkende Steuereinrichtung, welche ausgebildet ist, dass sie die Signale der Sensoreinrichtung im Hinblick auf innerhalb des Erfassungsbereichs erfasste stationäre Objekte auswertet und einen dynamisch veränderbaren Warnbereich festlegt, welcher kleiner als der Seitenerfassungsbereich oder maximal gleich diesem ist,
c) eine Warneinrichtung, welche von der Steuereinrichtung derart angesteuert ist, dass sie zum Warnen des Fahrzeugführers nur dann ein Warnsignal erzeugt, wenn von der Sensoreinrichtung in dem dynamisch veränderbaren Warnbereich ein stationäres Objekt erfasst wird.

Insbesondere wird der Warnbereich in seitlicher Richtung verändert, während er in Richtung der Längsmittelachse des Fahrzeugs oder des Fahrzeugzugs gesehen konstant bleibt und auf die Länge des Fahrzeugs oder des Fahrzeugzugs beschränkt ist.

Gemäß der Erfindung ist dann vorgesehen, dass

d) die Steuereinrichtung weiterhin ausgebildet ist, dass sie bei einem Erfassen eines stationären Objekts innerhalb des Seitenerfassungsbereichs und bei einem detektierten Abbiegen des Fahrzeugs oder des Fahrzeugzugs zu der Fahrzeugseite hin, auf welcher sich dieser Seitenerfassungsbereich befindet dem dynamisch veränderbaren Warnbereich einen dreieckförmigem Querschnitt zuweist, wobei
d1) eine erste Ecke des dreieckförmigen Querschnitts an der vorderen Kante oder an einem Vorderrad dieser Fahrzeugseite des Fahrzeugs oder des Fahrzeugzugs, eine zweite Ecke des dreieckförmigen Querschnitts an der hinteren Kante oder an einem Hinterrad dieser Fahrzeugseite des Fahrzeugs oder des Fahrzeugzugs und eine dritte Ecke des dreieckförmigen Querschnitts auf einer Linie angeordnet ist, welche senkrecht zur Längsmittelachse des Fahrzeugs oder des Fahrzeugzugs ist und sich von der ersten Ecke seitlich nach außen erstreckt, wobei
d2) eine Distanz zwischen der ersten Ecke und der dritten Ecke senkrecht zur Längsmittelachse des Fahrzeugs oder des Fahrzeugzugs gesehen abhängig

- von der Länge des Fahrzeugs oder des Fahrzeugzuges, und abhängig
- von der Position des erfassten stationären Objekts parallel zur Längsmittelachse des Fahrzeugs oder des Fahrzeugzugs gesehen, und
- von einem fiktiven Radius berechnet wird, den das Fahrzeug mit seiner beim Abbiegen herrschenden Geschwindigkeit noch befahren kann, ohne dass dabei eine maximal zugelassene Querbeschleunigung überschritten wird, oder
- von einem tatsächlichen Radius berechnet wird, den das Fahrzeug oder der Fahrzeugzug beim Abbiegen tatsächlich befährt und der abhängig von der beim Abbiegen des Fahrzeugs oder des Fahrzeugzugs herrschenden Geschwindigkeit und der dabei herrschenden Querbeschleunigung des Fahrzeugs oder des Fahrzeugzugs bestimmt wird.

Mit anderen Worten wird ein dreieckförmiger dynamisch veränderbarer Warnbereich definiert, welcher auf dem Fahrkorridor des Fahrzeugs oder des Fahrzeugzugs beim Abbiegen inklusive Schleppkurve basiert, wie er beim Abbiegen mit dem dann fiktiven minimalen Radius entsteht, den das Fahrzeug oder der Fahrzeugzug mit seiner beim Abbiegen herrschenden Geschwindigkeit noch befahren kann, ohne dass dabei eine maximal zugelassene Querbeschleunigung überschritten wird. Unter diesen Voraussetzungen entsteht beim Abbiegen ein minimaler Radius und bezogen auf seine Ausdehnung vom Fahrzeug maximal befahrener Fahrkorridor inklusive Schleppkurve, insbesondere im Hinblick auf seine seitliche Ausdehnung quer zur Fahrtrichtung.

Die maximal zugelassene Querbeschleunigung wird bevorzugt aus Erfahrungswerten gewonnen und bildet eine Sicherheitsgrenze, d.h. dass bei Querbeschleunigungen bis zur maximal zugelassenen Querbeschleunigung keine Kippgefahr oder unzulässige kritische Fahrsituationen entstehen können. Folglich wird von einem maximalen Fahrkorridor bei einem "maximal möglichen Abbiegen" des Fahrzeugs oder des Fahrzeugzugs ausgegangen und dann darauf basierend der dreieckförmige dynamisch veränderbare Warnbereich gebildet.

Alternativ wird der dreieckförmige dynamisch veränderbare Warnbereich bzw. die Distanz abhängig von dem tatsächlichen Radius berechnet, den das Fahrzeug oder der Fahrzeugzug beim Abbiegen tatsächlich befährt und der dann den tatsächlichen Fahrkorridor des Fahrzeugs oder des Fahrzeugzuges beim Abbiegen bestimmt und der abhängig von der beim Abbiegen des Fahrzeugs oder des Fahrzeugzugs herrschenden Geschwindigkeit und der dabei herrschenden Querbeschleunigung bestimmt wird.

Damit repräsentiert der beim Abbiegen maximale oder tatsächliche Fahrkorridor gerade den Bereich, welcher im Hinblick auf stationäre Objekte kritisch ist, welche sich innerhalb dieses Fahrkorridors befinden. Denn von solchen stationären Objekte ist dann zu erwarten, dass sie vom Fahrzeug bzw. vom Fahrzeugzug beim Abbiegen erfasst werden.

Zur Vereinfachung wird dann der eigentlich durch kreisbogenförmige Bahnen der Vorder- und Hinterräder begrenzte maximale oder tatsächliche Fahrkorridor im Seitenerfassungsbereich durch den dreieckförmigen dynamisch veränderbaren Warnbereich angenähert. Ergibt dann eine Prüfung, dass sich das erfasste stationäre Objekt innerhalb des dreieckförmigen dynamisch veränderbaren Warnbereichs befindet, so wird ein Warnsignal ausgegeben, ansonsten nicht.

Da der dreieckförmige dynamisch veränderbare Warnbereich auf dem maximalen oder tatsächlichen Fahrkorridor inklusive Schleppkurve basiert und insbesondere auch etwas größer als dieser ist, schließt dieser Warnbereich Bereiche aus, welche von dem tatsächlichen Fahrkorridor inklusive Schleppkurve ohnehin nicht erfasst werden und deshalb nur unnötige Warnsignale auslösen würden, wenn sich dort ein stationäres Objekt befindet. Insgesamt lassen sich dadurch unnötige Warnsignale vermeiden, wodurch die Akzeptanz der Vorrichtung beim Fahrzeugführer steigt.

Durch die in den Unteransprüchen aufgeführten Maßnahmen sind vorteilhafte Weiterbildungen und Verbesserungen des ersten Aspekts der Erfindung möglich.

Gemäß einer bevorzugten Ausführungsform ist die Steuereinrichtung weiterhin ausgebildet, dass sie den Radius r nach folgender Berechnungsvorschrift berechnet:

$$r = v\_ego^2 / a\_lat\_max,$$

oder

$$r = v\_ego^2 / a\_lat$$

wobei

- v_ego die Geschwindigkeit des Fahrzeugs oder des Fahrzeugzugs beim Abbiegen ist, und

- a_lat_max die maximal zugelassene Querbeschleunigung des Fahrzeugs oder des Fahrzeugzugs beim Abbiegen ist,
- a_lat die tatsächliche Querbeschleunigung des Fahrzeugs oder des Fahrzeugzugs beim Abbiegen ist.

Für den Fall $r = v\_ego^2/a\_lat\_max$ ist der Radius r ein minimaler Radius r_min.

Gemäß einer Weiterbildung ist die Steuereinrichtung weiterhin ausgebildet, dass sie eine maximale Distanz dy_max zwischen der ersten Ecke und der dritten Ecke des dreieckförmigen Querschnitts, welche eine obere Grenze für die Distanz dy_info zwischen der ersten Ecke und der dritten Ecke des dreieckförmigen Querschnitts darstellt, senkrecht zur Längsmittelachse des Fahrzeugs gesehen nach folgender Berechnungsvorschrift berechnet:

$$dy\_max = \sqrt{r^2 + l_{truck}^2} - r$$

wobei

- l_truck die Länge des Fahrzeugs oder des Fahrzeugzuges ist, und
- r der oben beschriebene Radius ist.

Die maximale Distanz dy_max entspricht dabei der lateralen Distanz zwischen der Bahn des rechten Hinterrads und der Bahn des rechten Vorderrads beim Rechtsabbiegen oder der Distanz zwischen der Bahn des linken Hinterrads und der Bahn des linken Vorderrads beim Linksabbiegen. Dabei wird davon ausgegangen, dass das erfasste stationäre Objekt sich rechts oder links seitlich vom Fahrzeug und in Richtung der Längsmittelachse des Fahrzeugs oder des Fahrzeugzugs gesehen auf Höhe oder Niveau der Fahrzeugfront befindet.

Da diese Position des Objekts 4 aber nicht dauerhaft vorhanden ist und sich mit der Bewegung des Fahrzeugs 1 beim Abbiegen relativ zum Fahrzeug ändert, ist die Steuereinrichtung bevorzugt weiterhin ausgebildet, dass sie die Distanz dy_info zwischen der ersten Ecke und der dritten Ecke des dreieckförmigen Querschnitts des dynamisch veränderbaren Warnbereichs senkrecht zur Längsmittelachse des Fahrzeugs gesehen abhängig von der Position dx des stationären Objekts parallel zur Längsmittelachse des Fahrzeugs gesehen nach folgender Berechnungsvorschrift berechnet:

$$dy\_info = dy\_max * (l\_truck + dx) / l\_truck$$

wobei

- dy_max die maximale Distanz zwischen der ersten Ecke und der dritten Ecke des dreieckförmigen Querschnitts senkrecht zur Längsmittelachse des Fahrzeugs gesehen ist, und
- dx die erfasste Position des stationären Objekts innerhalb des Seitenerfassungsbereichs parallel zur Längsmittelachse des Fahrzeugs gesehen beispielsweise ausgehend von einer Fahrzeugfront ist, und
- l_truck die Länge des Fahrzeugs oder des Fahrzeugzugs ist.

Bevorzugt kann die Steuereinrichtung auch ausgebildet sein, dass sie ein Abbiegen des Fahrzeugs repräsentierende Signale empfangen kann, beispielsweise von einem Fahrrichtungsanzeiger und/oder von einem Lenkradwinkelsensor.

Bevorzugt ist die Sensoreinrichtung und auch der Ursprung eines fahrzeugfesten Koordinatensystems an der ersten Ecke, d.h. an der vorderen Fahrzeugkante zwischen der Frontfläche und der Seitenfläche bzw. am rechten Vorderrad angeordnet, so dass Größen wie z.B. die erfasste Position dx des stationären Objekts, die maximale Distanz dy_max zwischen der ersten Ecke und der dritten Ecke des dreieckförmigen Querschnitts und die Distanz dy_info zwischen der ersten Ecke und der dritten Ecke des dreieckförmigen Querschnitts beispielsweise von dort aus in dem fahrzeugfesten Koordinatensystem bestimmt werden können.

Gemäß einer Weiterbildung ist der Seitenerfassungsbereich des Erfassungsbereichs seitlich von der Fahrzeugseite angeordnet, welche die von einem Fahrersitz des Fahrzeugs abgewandte Fahrzeugseite darstellt. Dann können kritische Situationen besonders bei links gesteuerten Fahrzeugen beim Rechtsabbiegen vermieden werden. Alternativ kann der Seitenerfassungsbereich des Erfassungsbereichs auch seitlich von der Fahrzeugseite angeordnet sein, welche die dem Fahrersitz des Fahrzeugs zugewandte Fahrzeugseite darstellt. In diesem Fall können kritische Situationen beim Linksabbiegen vermieden werden.

Gemäß einer Weiterbildung kann die Warneinrichtung ausgebildet sein, dass sie eine Kaskade von Warnsignalen abhängig von einem Gefahrenmaß der durch das durch das Abbiegen des Fahrzeugs im Hinblick auf das erfasste stationäre Objekt erzeugt. Die Warnsignale können beispielsweise optische Signale mit jeweils unterschiedlichen Farben und/oder akustische Signale mit jeweils unterschiedlichen Tönen und/oder Tonfolgen sein.

Eine Kaskade von Warnsignalen kann dabei beispielsweise vom Gefahrenmaß abhängige Farben eines optischen Signals und/oder ein vom Gefahrenmaß abhängiges akustisches Signal beinhalten. Beispielsweise können durch die Warneinrichtung bei Vorliegen eines vernachlässigbaren Gefahrenmaßes ein optisches grünes Warnsignal, bei Vorliegen eines geringen Gefahrenmaßes ein optisches gelbes Warnsignal, bei Vorliegen eines mittleren Gefahrenmaßes ein optisches rotes optisches Warnsignal und bei Vorliegen eines hohen Gefahrenmaßes ein optisches rotes Signal und zusätzlich ein akustisches Signal erzeugt werden. Auch können Frequenz und/oder Tonfolge des akustischen Signals abhängig vom Gefahrenmaß variiert werden.

Dadurch wird insgesamt die mittels der Vorrichtung erzielbare Verkehrssicherheit vorteilhaft hoch, ohne dass der Fahrer durch zu häufige und zahlreiche Warnsignale abgelenkt wird.

Die Erfindung betrifft auch ein Fahrzeug, welches mit einer oben beschriebenen Vorrichtung versehen ist.

Zeichnung

Nachstehend ist ein Ausführungsbeispiel der Erfindung in der Zeichnung dargestellt und in der nachfolgenden Beschreibung näher erläutert. In der Zeichnung zeigt

Fig.1 einen vorderen Teil einer Seitenansicht eines Fahrzeugs mit einer Vorrichtung zum Warnen eines Fahrzeugführers eines Fahrzeugs vor einem stationären Objekt gemäß einer bevorzugten Ausführungsform der Erfindung;

Fig.2 eine Draufsicht auf das Fahrzeug von Fig.1 mit einem symbolisch dargestellten Erfassungsbereich einer Sensoreinrichtung der Vorrichtung;

Fig.3 eine stark schematisierte Draufsicht auf das Fahrzeug von Fig.1 mit einem symbolisch dargestellten dynamisch veränderbaren Warnbereich A_info der Vorrichtung.

Beschreibung des Ausführungsbeispiels

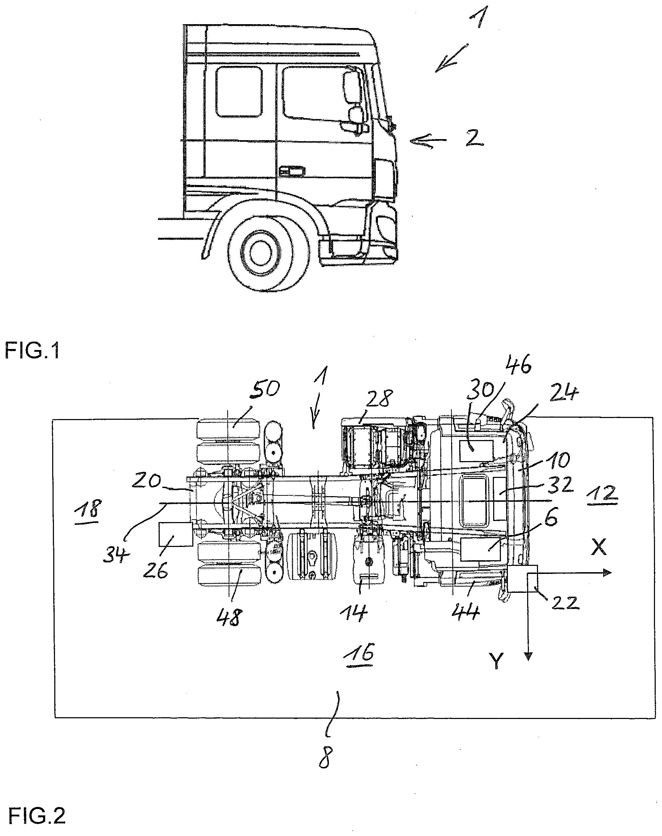

In **Fig.1** ist ein vorderer Teil einer Seitenansicht eines hier beispielsweise Linkslenker-Fahrzeugs 1, insbesondere eines Zugfahrzeugs einer Zugfahrzeug-Anhängerkombination mit einer Vorrichtung 2 zum Warnen eines Fahrzeugführers des Fahrzeugs vor einem stationären Objekt 4 gemäß einer bevorzugten Ausführungsform der Erfindung gezeigt. Anstatt aus lediglich dem Zugfahrzeug 1 kann das Fahrzeug auch aus einer Zugfahrzeug-Anhängerkombination bestehen, wie beispielsweise ein Sattelzug oder ein Gliederzug.

Die Vorrichtung 2 beinhaltet eine Sensoreinrichtung 6 mit einem Erfassungsbereich 8, welcher sich wenigstens von einem vor einer Fahrzeugfront 10 angeordneten Fronterfassungsbereich 12 über einen seitlich von einer hier beispielsweise rechten Fahrzeugseite 14 angeordneten Seitenerfassungsbereich 16 bis zu einem von dem Seitenerfassungsbereich 16 weg weisenden Ende eines Heckerfassungsbereichs 18 hinter dem Fahrzeugheck 20 erstreckt. Der Seitenerfassungsbereich 16 erstreckt sich insbesondere von der Fahrzeugfront 10 bis zum Fahrzeugheck 20 **(Fig.2)**.

Der Erfassungsbereich 8 ist hier idealisiert rechteckförmig dargestellt, kann aber abhängig von der Art der Sensoreinrichtung 6 eine beliebige Form aufweisen. Die Sensoreinrichtung 6 kann ein innerhalb des Erfassungsbereichs 8 insbesondere stationäres Objekt 4 erfassen, d.h. seine Lage in Bezug zu einem beispielsweise fahrzeugfesten Koordinatensystem.

In **Fig.1** und **Fig.2** sind von der Sensoreinrichtung 6 ein erster Sensor 22 an der rechten vorderen Kante eines Fahrerhauses 24 und ein zweiter Sensor 26 am hinteren Ende eines in Fahrtrichtung rechten Längsrahmenträgers eines Leiterrahmes des Zugfahrzeugs erkennbar. Darüber hinaus kann die Sensoreinrichtung 6 noch weitere Sensoren beinhalten, welche den Erfassungsbereich 8 dann erweitern, beispielsweise auch auf den anderen Seitenerfassungsbereich auf der linken Fahrzeugseite 28. Bei dem Sensor bzw. bei den Sensoren handelt es sich beispielsweise um Radarsensoren, Lasersensoren oder auch Kameras.

Weiterhin beinhaltet die Vorrichtung 2 auch eine mit der Sensoreinrichtung 6 zusammen wirkende Steuereinrichtung 30, welche ausgebildet ist, dass sie die Signale der Sensoreinrichtung 6 dahingehend auswertet, ob sich ein stationäres Objekt 4 sich innerhalb des Erfassungsbereichs 8 befindet. Außerhalb des Erfassungsbereichs 8 soll keine Erfassung von Objekten 4 möglich sein. Stationär bedeutet, dass sich das Objekt absolut, d.h. in Bezug zur Umgebung gesehen nicht bewegt.

Das Fahrzeug besitzt hier beispielsweise zwei Achsen, eine Vorderachse mit einem rechten Vorderrad 44 und einem linken Vorderrad 46 und eine Hinterachse mit hier beispielsweise zwei rechten Hinterrädern 48 und zwei linken Hinterrädern 50.

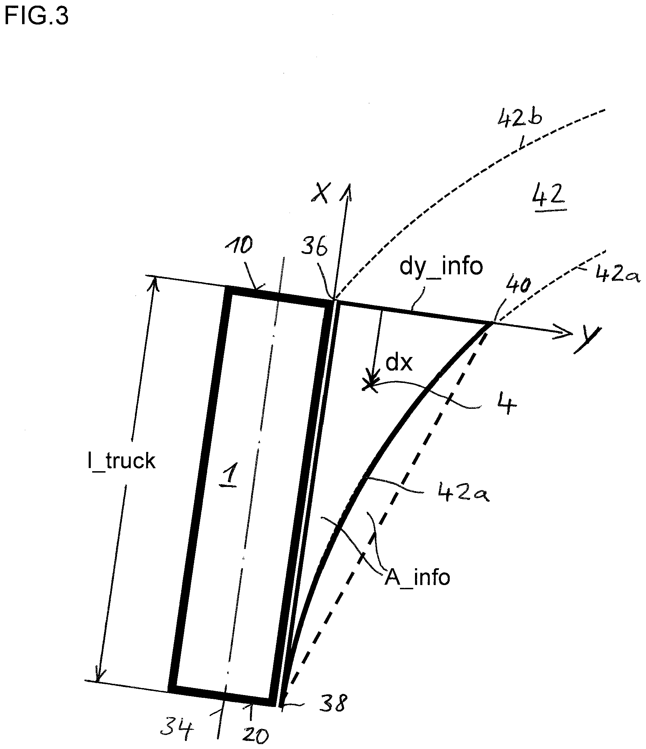

Die Steuereinrichtung 30 ist ausgebildet, dass sie einen dynamisch veränderbaren Warnbereich A_info festlegt, der in **Fig.3** dargestellt ist. Dynamisch veränderbarer Warnbereich A_info bedeutet, dass eine äußere Grenze bzw. wenigstens ein Rand des Warnbereichs A_info veränderbar ist. Der dynamisch veränderbare Warnbereich A_Info ist hier stets kleiner oder gleich in Bezug zu dem Seitenerfassungsbereich 16, d.h. er kann generell nicht größer als der Seitenerfassungsbereich 16 sein.

Der Warnbereich A_info wird hier insbesondere lediglich in seitlicher Richtung innerhalb des Seitenerfassungsbereichs 16 verändert, während er in Richtung einer Längsmittelachse 34 des Fahrzeugs 1 gesehen konstant bleibt und auf die Länge l_truck des Fahrzeugs 1 beschränkt ist.

Die Vorrichtung 2 umfasst auch eine Warneinrichtung 32, welche von der Steuereinrichtung 30 derart angesteuert ist, dass sie zum Warnen des Fahrzeugführers nur dann ein Warnsignal erzeugt, wenn von der Sensoreinrichtung 6 innerhalb des dynamisch veränderbaren Warnbereichs A_info ein stationäres Objekt 4 erfasst wird.

Die Steuereinrichtung 30 kann weiterhin ein Abbiegen des Fahrzeugs 1 nach rechts oder nach links repräsentierende Signale empfangen, beispielsweise von einem Fahrrichtungsanzeiger und/oder von einem Lenkradwinkelsensor.

Die Steuereinrichtung 30 ist weiterhin ausgebildet, dass sie bei einem Erfassen eines stationären Objekts 4 innerhalb des Seitenerfassungsbereichs 16 und bei einem detektierten Abbiegen des Fahrzeugs zu der hier beispielsweise rechten Fahrzeugseite 14 hin, auf welcher sich der rechte Seitenerfassungsbereich 16 befindet, dem dynamisch veränderbaren Warnbereich A_info einen dreieckförmigen Querschnitt zuweist, wie aus **Fig.3** hervorgeht.

Der dreieckförmige dynamisch veränderbare Warnbereich A_info basiert auf dem Fahrkorridor 42 inklusive Schleppkurve des Fahrzeugs 1 beim Abbiegen hier beispielsweise nach rechts, wobei der Fahrkorridor 42 gemäß **Fig.3** von der Bahn 42a der beiden rechten Hinterräder 48 und von der Bahn 42b des rechten Vorderrads 44 begrenzt wird.

Für die Berechnung bzw. Festlegung des dreieckförmigen dynamisch veränderbaren Warnbereichs A_info wird beim Abbiegen gemäß einer ersten Alternative der Fall angenommen, dass sich das Fahrzeug entlang eines minimalen Radius r_min bewegt, den das Fahrzeug 1 mit seiner beim Abbiegen herrschenden Geschwindigkeit v_ego noch befahren kann, ohne dass dabei eine maximal zugelassene Querbeschleunigung a_lat_max überschritten wird. Denn unter diesen Voraussetzungen entsteht ein maximaler Fahrkorridor 42, insbesondere im Hinblick auf seine seitliche Ausdehnung in Y-Richtung.

Alternativ kann für die Berechnung bzw. Festlegung des dreieckförmigen dynamisch veränderbaren Warnbereichs A_info der Fall angenommen werden, dass sich das Fahrzeug beim Abbiegen mit einer Querbeschleunigung a_lat kleiner als die maximal zugelassene Querbeschleunigung a_lat_max bewegt. In diesem Fall wird der tatsächliche Radius r herangezogen, den das Fahrzeug 1 beim Abbiegen befährt und der abhängig von der beim Abbiegen des Fahrzeugs 1 herrschenden Geschwindigkeit v_ego und der dabei herrschenden direkt oder indirekt gemessenen Querbeschleunigung a_lat bestimmt wird.

Zur Vereinfachung wird die in **Fig.3** innerhalb des Seitenerfassungsbereichs 16 eigentlich kreisbogenförmige Bahn 42a der rechten Hinterräder 48 im Seitenerfassungsbereich 16 linear angenähert, was gestrichelt dargestellt ist. So entsteht dann im Seitenerfassungsbereich 16 der dreieckförmige Querschnitt des Warnbereichs A_info. Dieser Warnbereichs A_info ist dann etwas größer als der tatsächliche Fahrkorridor 42

Dabei befindet sich eine erste Ecke 36 des dreieckförmigen Querschnitts des Warnbereichs A_info am rechten Vorderrad 44 des Fahrzeugs 1, also hier etwa an der vorderen rechten Kante des Fahrzeugs 1, wo die Fahrzeugfront 10 und die rechte Fahrzeugseite 14 aufeinander stoßen. Zur Vereinfachung kann angenommen werden, dass sich das rechte Vorderrad des Fahrzeugs 1 an der vorderen rechten Kante des Fahrzeugs befindet.

Eine zweite Ecke 38 des dreieckförmigen Querschnitts des Warnbereichs A_info befindet sich dann vereinfacht an der hinteren rechten Kante des Fahrzeugs 1, wo auch die beiden rechten Hinterräder 48 angeordnet sind und wo auch näherungsweise die rechte Fahrzeugseite 14 und das Fahrzeugheck 20 aufeinander stoßen.

Bei einem aus Zugfahrzeug und Anhänger bestehenden Fahrzeugzug befindet sich die erste Ecke 36 des dreieckförmigen Querschnitts des Warnbereichs A_info am rechten Vorderrad 44 des Zugfahrzeugs 1, also etwa an der vorderen rechten Kante des Zugfahrzeugs 1, wo die Fahrzeugfront 10 und die rechte Fahrzeugseite 14 des Zugfahrzeugs aufeinander stoßen. Die zweite Ecke 38 des dreieckförmigen Querschnitts des Warnbereichs A_info befindet sich dann an der hinteren rechten Kante des Anhängers, wo auch das rechte Hinterrad des Anhängers angeordnet ist und wo auch näherungsweise die rechte Fahrzeugseite und das Fahrzeugheck des Anhängers aufeinander stoßen.

Eine dritte Ecke 40 des dreieckförmigen Querschnitts des Warnbereichs A_info ist auf einer Linie angeordnet ist, welche senkrecht zur Längsmittelachse 34 des Fahrzeugs 1 ist und sich von der ersten Ecke 36 seitlich nach außen erstreckt.

An der ersten Ecke 36 des dreieckförmigen Querschnitts des Warnbereichs A_info, an welcher auch der erste Sensor 22 angeordnet ist, sei der Ursprung des fahrzeugfesten X-Y-Koordinatensystems angenommen, wobei die X-Achse parallel zur Längsmittelachse 34 des Fahrzeugs und die Y-Achse senkrecht zu dieser ist und sich daher in Querrichtung nach außen erstreckt.

Von dem dreieckförmigen Querschnitt des Warnbereichs A_info ist hier eine Distanz dy_info zwischen der ersten Ecke 36 und der dritten Ecke 40 senkrecht zur Längsmittelachse 34 des Fahrzeugs oder hier in Y-Richtung gesehen abhängig von wenigstens den folgenden Größen:

- Der Länge l_truck des Fahrzeugs 1,

- Der Position dx des erfassten stationären Objekts 4 parallel zur Längsmittelachse 34 des Fahrzeugs 1 oder hier in X-Richtung gesehen, und

- von einem (fiktiven und minimalen) Radius r, den das Fahrzeug 1 mit seiner beim Abbiegen nach rechts herrschenden Geschwindigkeit noch befahren kann, ohne dass dabei die maximal zugelassene Querbeschleunigung a_lat_max überschritten wird, oder

- von dem tatsächlichen Radius r, den das Fahrzeug 1 beim Abbiegen nach rechts tatsächlich befährt und dann der abhängig von der beim Abbiegen des Fahrzeugs 1 herrschenden Geschwindigkeit v_ego und der dabei herrschenden Querbeschleunigung a_lat bestimmt wird.

Mit anderen Worten wird ein dreieckförmiger dynamisch veränderbarer Warnbereich definiert, welcher auf einem (fiktiven) Fahrkorridor 42 inklusive Schleppkurve des Fahrzeugs 1 beim Abbiegen basiert, wie er beim Abbiegen unter einem (fiktiven und minimalen) Radius r entsteht, den das Fahrzeug 1 mit seiner beim Abbiegen herrschenden Geschwindigkeit v_ego noch befahren kann, ohne dass dabei eine maximal zugelassene Querbeschleunigung a_lat_max überschritten wird.

Alternativ wird der dreieckförmige dynamisch veränderbare Warnbereich definiert, welcher auf einem tatsächlichen Fahrkorridor 42 inklusive Schleppkurve des Fahrzeugs 1 beim Abbiegen basiert, der abhängig von einem Radius r berechnet wird, den das Fahrzeug 1 beim Abbiegen tatsächlich befährt der abhängig von der beim Abbiegen des Fahrzeugs 1 herrschenden Geschwindigkeit v_ego und der dabei herrschenden Querbeschleunigung a_lat bestimmt wird.

Die maximal zugelassene Querbeschleunigung a_lat_max wird bevorzugt aus Erfahrungswerten gewonnen und bildet eine Sicherheitsgrenze, d.h. dass bei Querbeschleunigungen bis zur maximal zugelassenen Querbeschleunigung a_lat_max keine Kippgefahr oder unzulässige kritische Fahrsituationen wie z.B. ein unzulässiges Über- oder Untersteuern entstehen können. Folglich wird von einem "maximal möglichen Abbiegen" des Fahrzeugs ausgegangen und basierend darauf der dreieckförmige dynamisch veränderbare Warnbereich A_info gebildet.

Die für die alternative Vorgehensweise beim Abbiegen des Fahrzeugs 1 herrschende Querbeschleunigung a_lat kann direkt oder indirekt gemessen werden.

Ergibt dann eine Prüfung, dass sich das erfasste stationäre Objekt 4 innerhalb des dreieckförmigen dynamisch veränderbaren Warnbereichs A_Info befindet, so wird ein Warnsignal ausgegeben, ansonsten nicht.

Bevorzugt ist die Steuereinrichtung 30 ausgebildet, dass sie den Radius nach folgender Berechnungsvorschrift berechnet:

$$r = v\_ego^2 / a\_lat\_max \qquad (1)$$

$$r = v\_ego^2 / a\_lat \qquad (1')$$

wobei

- v_ego die Geschwindigkeit des Fahrzeugs 1 oder des Fahrzeugzugs beim Abbiegen ist, und
- a_lat_max die maximal zugelassene Querbeschleunigung des Fahrzeugs 1 oder des Fahrzeugzugs beim Abbiegen ist,
- a_lat die tatsächliche Querbeschleunigung des Fahrzeugs 1 oder des Fahrzeugzugs beim Abbiegen ist.

Die Steuereinrichtung 30 ist weiterhin ausgebildet, dass sie eine maximale Distanz dy_max zwischen der ersten Ecke 36 und der dritten Ecke 40 des dreieckförmigen Querschnitts des dynamisch veränderbaren Warnbereichs A_info senkrecht zur Längsmittelachse 34 des Fahrzeugs 1 gesehen, welche eine obere Grenze für die Distanz dy_info zwischen der ersten Ecke 36 und der dritten Ecke 40 des dreieckförmigen Querschnitts darstellt, nach folgender Berechnungsvorschrift berechnet:

$$dy\_max = \sqrt{r^2 + l_{truck}^2} - r \qquad\qquad (2)$$

wobei

- l_truck die Länge des Fahrzeugs 1 ist, und
- r der oben gemäß (1) oder (1') berechnete Radius ist.

Die maximale Distanz dy_max zwischen der ersten Ecke 36 und der dritten Ecke 40 entspricht dabei der Distanz zwischen der Bahn 42a der rechten Hinterräder 48 und der Bahn 42a des rechten Vorderrads 44 beim Rechtsabbiegen bzw. der Distanz zwischen der Bahn der linken Hinterräder 50 und der Bahn des linken Vorderrads 46 beim Linksabbiegen, welches hier allerdings nicht betrachtet wird. Dabei wird davon ausgegangen, dass sich das erfasste stationäre Objekt 4 hier rechts seitlich vom Fahrzeug 1 und in Richtung der Längsmittelachse 34 des Fahrzeugs 1 gesehen auf dem Niveau der Fahrzeugfront 10 befindet.

Da diese Position des Objekts 4 aber nicht dauerhaft vorhanden ist und sich mit der Bewegung des Fahrzeugs 1 beim Abbiegen relativ zum Fahrzeug ändert, ist die Steuereinrichtung 30 bevorzugt weiterhin ausgebildet, dass sie die Distanz dy_info zwischen der ersten Ecke 36 und der dritten Ecke 40 des dreieckförmigen Querschnitts senkrecht zur Längsmittelachse 43 des Fahrzeugs gesehen abhängig von der erfassten Position dx des stationären Objekts 4 parallel zur Längsmittelachse 34 des Fahrzeugs 1 gesehen hier beispielsweise ausgehend vom Ursprung des Koordinatensystems X-Y nach folgender Berechnungsvorschrift berechnet:

$$dy\_info = dy\_max * (l\_truck + dx) / l\_truck \qquad\qquad (3)$$

wobei

- dy_max die maximale Distanz zwischen der ersten Ecke 36 und der dritten Ecke 40 des dreieckförmigen Querschnitts senkrecht zur Längsmittelachse 43 des Fahrzeugs 1 gesehen ist, und
- dx die erfasste Position des stationären Objekts parallel zur Längsmittelachse 34 des Fahrzeugs 1 hier beispielsweise ausgehend vom Ursprung des fahrzeugfesten Koordinatensystems X-Y gesehen ist, und
- l_truck die Länge des Fahrzeugs 1 ist.

Durch (3) wird daher die momentane Position dx des stationären Objekts 4 parallel zur Längsmittelachse 34 des Fahrzeugs berücksichtigt.

Da bevorzugt der erste Sensor 22 an der ersten Ecke 36 angeordnet ist, wo sich auch der Ursprung des X-Y-Koordinatensystems befindet, können Größen wie z.B. die Position dx des stationären Objekts 4, die maximale Distanz dy_max zwischen der ersten Ecke 36 und der dritten Ecke 40 des dreieckförmigen Querschnitts und die Distanz dy_info zwischen der ersten Ecke 36 und der dritten Ecke 40 des dreieckförmigen Querschnitts beispielsweise in dem X-Y-Koordinatensystem bestimmt werden.

Die Berechnung des dreieckförmigen Querschnitts des dynamisch veränderbaren Warnbereichs A_info soll im Folgenden anhand eines Beispiels erfolgen:
Wenn das Fahrzeug 1 beim hier beispielsweise Rechtsabbiegen eine Geschwindigkeit v_ego von 5 m/s aufweist und dabei eine maximale Querbeschleunigung a_lat_max von 1,5 m/s² zugelassen wird, so ergibt sich nach (1) ein dann minimaler Radius r von 16,7 m. Wenn die Fahrzeuglänge l_truck beispielsweise 10 m beträgt, so beträgt die maximale laterale Distanz dy_max zwischen der ersten Ecke 36 und der dritten Ecke 40 nach (2) 2.77 m. Diese maximale laterale Distanz dy_max zwischen der ersten Ecke 36 und der dritten Ecke 40 trifft jedoch nur dann zu, wenn sich das Objekt 4 rechts seitlich vom Fahrzeug 1 und parallel zur Frontfläche 10 befindet (dx = 0). Mit einer Bewegung des Fahrzeugs, z.B. innerhalb von 1 s hat sich die Distanz in X-Richtung auf dx = 5 m erhöht. Mit (3) wird dann bei dx = 5 m des Objekts 4 eine Distanz dy_info von 1,38 m berechnet. Bei einer Distanz von dx = 5 m eines Objekts 4 von der Fahrzeugfront 10 besteht daher eine Kollisionsgefahr mit dem Fahrzeug 1 beim Rechtsabbiegen nur dann, wenn sich das Objekt 4 innerhalb des Warnbereichs A_Info befindet, welcher auf dem Niveau der Fahrzeugfront 10 eine Quererstreckung von dy_info = 1.38m zwischen der ersten Ecke 36 und der dritten Ecke 40 hat, was hier der Fall wäre. Dann steuert die Steuereinrichtung 30 die Warneinrichtung 32 zur Erzeugung eines Warnsignals an.

Wenn wie hier beispielsweise der Seitenerfassungsbereich 16 des Erfassungsbereichs 8 seitlich von der rechten Fahrzeugseite 14 angeordnet, welche die von einem Fahrersitz des Fahrzeugs abgewandte Fahrzeugseite darstellt, dann können kritische Situationen besonders bei links gesteuerten Fahrzeugen beim Rechtsabbiegen vermieden werden. Alternativ kann der Seitenerfassungsbereich des Erfassungsbereichs 8 auch seitlich von der linken Fahrzeugseite 28 angeordnet sein. In diesem Fall können kritische Situationen besonders bei rechts gesteuerten Fahrzeugen beim Linksabbiegen vermieden werden.

Die Warneinrichtung 32 ist bevorzugt ausgebildet, dass sie eine Kaskade von Warnsignalen abhängig von einem Gefahrenmaß der durch das durch das Abbiegen des Fahrzeugs 1 im Hinblick auf das erfasste stationäre Objekt 4 erzeugt. Die Warnsignale können beispielsweise optische Signale mit jeweils unterschiedlichen Farben und/oder akustische Signale mit jeweils unterschiedlichen Tönen und/oder Tonfolgen sein.

Eine Kaskade von Warnsignalen kann dabei beispielsweise vom Gefahrenmaß abhängige Farben eines optischen Signals und/oder ein vom Gefahrenmaß abhängiges akustisches Signal beinhalten. Beispielsweise können durch die Warneinrichtung 32 bei Vorliegen eines vernachlässigbaren Gefahrenmaßes ein optisches grünes Warnsignal, bei Vorliegen eines geringen Gefahrenmaßes ein optisches gelbes Warnsignal, bei Vorliegen eines mittleren Gefahrenmaßes ein optisches rotes optisches Warnsignal und bei Vorliegen eines hohen Gefahrenmaßes ein optisches rotes Signal und zusätzlich ein akustisches Signal erzeugt werden. Auch können Frequenz und/oder Tonfolge des akustischen Signals abhängig vom Gefahrenmaß variiert werden.

Bezugszeichenliste

| | |
|---|---|
| 1 | Fahrzeug |
| 2 | Vorrichtung |
| 4 | Objekt |
| 6 | Sensoreinrichtung |
| 8 | Erfassungsbereich |
| 10 | Fahrzeugfront |
| 12 | Fronterfassungsbereich |
| 14 | rechte Fahrzeugseite |
| 16 | Seitenerfassungsbereich |
| 18 | Heckerfassungsbereich |
| 20 | Fahrzeugheck |
| 22 | erster Sensor |
| 24 | Fahrerhaus |
| 26 | zweiter Sensor |
| 28 | linke Fahrzeugseite |
| 30 | Steuereinrichtung |
| 32 | Warneinrichtung |
| 34 | Längsmittelachse |
| 36 | erste Ecke |
| 38 | zweite Ecke |
| 40 | dritte Ecke |
| 42 | Fahrkorridor |
| 42a | Bahn der rechten Hinterräder |
| 42b | Bahn des rechten Vorderrads |
| 44 | rechtes Vorderrad |
| 46 | linkes Vorderrad |
| 48 | rechte Hinterräder |
| 50 | linke Hinterräder |

**Patentansprüche**

1. Vorrichtung zum Warnen eines Fahrzeugführers eines Fahrzeugs (1) oder eines Fahrzeugzugs vor einem stationären Objekt (4) beinhaltend wenigstens Folgendes:

   a) Eine Sensoreinrichtung (6) mit einem Erfassungsbereich (8), welcher einen seitlich von einer Fahrzeugseite (14) angeordneten und in Richtung einer Längsmittelachse (34) des Fahrzeugs (1) oder des Fahrzeugzugs gesehen sich von einer Fahrzeugfront (10) bis zu einem Fahrzeugheck (20) erstreckenden Seitenerfassungsbereich (16) umfasst, wobei die Sensoreinrichtung (6) ausgebildet ist, dass sie ein stationäres Objekt (4) innerhalb des Erfassungsbereichs (8) erfassen kann,

b) eine mit der Sensoreinrichtung (6) zusammen wirkende Steuereinrichtung (30), welche ausgebildet ist, dass sie die Signale der Sensoreinrichtung (6) im Hinblick auf innerhalb des Erfassungsbereichs (16) erfasste stationäre Objekte (4) auswertet und einen dynamisch veränderbaren Warnbereich (A_info) festlegt, welcher kleiner als der Seitenerfassungsbereich (16) oder maximal gleich diesem ist,

c) eine Warneinrichtung (32), welche von der Steuereinrichtung (30) derart angesteuert ist, dass sie zum Warnen des Fahrzeugführers nur dann ein Warnsignal erzeugt, wenn von der Sensoreinrichtung (6) in dem dynamisch veränderbaren Warnbereich (A_info) ein stationäres Objekt (4) erfasst wird, **dadurch gekennzeichnet, dass**

d) die Steuereinrichtung (30) weiterhin ausgebildet ist, dass sie bei einem Erfassen eines stationären Objekts (4) innerhalb des Seitenerfassungsbereichs (16) und bei einem detektierten Abbiegen des Fahrzeugs (1) oder des Fahrzeugzugs zu der Fahrzeugseite (14) hin, auf welcher sich der Seitenerfassungsbereich (16) befindet dem dynamisch veränderbaren Warnbereich (A_info) einen dreieckförmigem Querschnitt zuweist, wobei

d1) eine erste Ecke (36) des dreieckförmigen Querschnitts an der vorderen Kante oder an einem Vorderrad (44) dieser Fahrzeugseite (14) des Fahrzeugs (1) oder des Fahrzeugzugs, eine zweite Ecke (38) des dreieckförmigen Querschnitts an der hinteren Kante oder an einem Hinterrad (48) dieser Fahrzeugseite (14) des Fahrzeugs (1) oder des Fahrzeugzugs und eine dritte Ecke (40) des dreieckförmigen Querschnitts auf einer Linie angeordnet ist, welche senkrecht zur Längsmittelachse (34) des Fahrzeugs (1) oder des Fahrzeugzugs ist und sich von der ersten Ecke (36) seitlich nach außen erstreckt, wobei

d2) eine Distanz (dy_info) zwischen der ersten Ecke (36) und der dritten Ecke (40) senkrecht zur Längsmittelachse (34) des Fahrzeugs (1) oder des Fahrzeugzugs gesehen abhängig

- von der Länge (l_truck) des Fahrzeugs (1) oder des Fahrzeugzuges, und
- von der Position (dx) des erfassten stationären Objekts (4) parallel zur Längsmittelachse (34) des Fahrzeugs (1) oder des Fahrzeugzugs gesehen, und
- von einem fiktiven Radius (r) berechnet wird, den das Fahrzeug (1) oder der Fahrzeugzug mit seiner beim Abbiegen herrschenden Geschwindigkeit (v_ego) noch befahren kann, ohne dass dabei eine maximal zugelassene Querbeschleunigung (a_lat_max) überschritten wird, oder
- von einem tatsächlichen Radius (r) berechnet wird, den das Fahrzeug (1) oder der Fahrzeugzug beim Abbiegen tatsächlich befährt und der abhängig von der beim Abbiegen des Fahrzeugs (1) oder des Fahrzeugzugs herrschenden Geschwindigkeit (v_ego) und der dabei herrschenden Querbeschleunigung (a_lat) des Fahrzeugs (1) oder des Fahrzeugzugs bestimmt wird.

2. Vorrichtung nach Anspruch 1, **dadurch gekennzeichnet, dass** die Steuereinrichtung (30) weiterhin ausgebildet ist, dass sie den Radius (r) nach folgender Berechnungsvorschrift berechnet:

$$r = v\_ego\ ^2 / a\_lat\_max,$$

oder dass sie den Radius (r) nach folgender Berechnungsvorschrift berechnet:

$$r = v\_ego\ ^2 / a\_lat$$

wobei

- v_ego die Geschwindigkeit des Fahrzeugs (1) oder des Fahrzeugzugs beim Abbiegen ist, und
- a_lat_max die maximal zugelassene Querbeschleunigung des Fahrzeugs (1) oder des Fahrzeugzugs beim Abbiegen ist.
- a_lat die tatsächliche Querbeschleunigung des Fahrzeugs (1) oder des Fahrzeugzugs beim Abbiegen ist.

3. Vorrichtung nach Anspruch 2, **dadurch gekennzeichnet, dass** die Steuereinrichtung (30) weiterhin ausgebildet ist, dass sie eine maximale Distanz (dy_max) zwischen der ersten Ecke (36) und der dritten Ecke (40) des dreieckförmigen Querschnitts, welche eine obere Grenze für die Distanz (dy_info) zwischen der ersten Ecke (36) und der dritten Ecke (40) des dreieckförmigen Querschnitts bildet, senkrecht zur Längsmittelachse (34) des Fahrzeugs (1) oder des Fahrzeugzugs gesehen nach folgender Berechnungsvorschrift berechnet:

$$dy\_max = \sqrt{r^2 + l_{truck}^2} - r$$

wobei

- l_truck die Länge des Fahrzeugs (1) oder des Fahrzeugzugs ist, und
- r der Radius ist.

4. Vorrichtung nach Anspruch 3, **dadurch gekennzeichnet, dass** die Steuereinrichtung (30) weiterhin ausgebildet ist, dass sie die Distanz (dy_info) zwischen der ersten Ecke (36) und der dritten Ecke (40) des dreieckförmigen Querschnitts senkrecht zur Längsmittelachse (34) des Fahrzeugs (1) oder des Fahrzeugzugs gesehen abhängig von der erfassten Position (dx) des stationären Objekts (4) parallel zur Längsmittelachse (34) des Fahrzeugs (1) oder des Fahrzeugzugs gesehen nach folgender Berechnungsvorschrift berechnet:

$$dy\_info = dy\_max * (l\_truck + dx) / l\_truck$$

wobei

- dy_max die maximale Distanz zwischen der ersten Ecke (36) und der dritten Ecke (40) des dreieckförmigen Querschnitts senkrecht zur Längsmittelachse (34) des Fahrzeugs (1) gesehen ist, und
- dx die erfasste Position des stationären Objekts (4) parallel zur Längsmittelachse (34) des Fahrzeugs (1) oder des Fahrzeugzugs ist, und
- l_truck die Länge des Fahrzeugs (1) oder des Fahrzeugzugs ist.

5. Vorrichtung nach einem der vorhergehenden Ansprüche, **dadurch gekennzeichnet, dass** die Sensoreinrichtung (6) an der ersten Ecke (36) angeordnet ist.

6. Vorrichtung nach einem der vorhergehenden Ansprüche, **dadurch gekennzeichnet, dass** die Steuereinrichtung (30) ausgebildet ist, dass sie ein Abbiegen des Fahrzeugs (1) oder des Fahrzeugzugs repräsentierende Signale empfangen kann.

7. Vorrichtung nach einem der vorhergehenden Ansprüche, **dadurch gekennzeichnet, dass** der Seitenerfassungsbereich (16) des Erfassungsbereichs (8) seitlich von der Fahrzeugseite (14) angeordnet ist, welche die von einem Fahrersitz des Fahrzeugs (1) abgewandte Fahrzeugseite darstellt.

8. Vorrichtung nach einem der Ansprüche 1 bis 6, **dadurch gekennzeichnet, dass** der Seitenerfassungsbereich des Erfassungsbereichs (8) seitlich von der Fahrzeugseite (28) angeordnet ist, welche die dem Fahrersitz des Fahrzeugs zugewandte Fahrzeugseite darstellt.

9. Vorrichtung nach einem der vorhergehenden Ansprüche, **dadurch gekennzeichnet, dass** die Warneinrichtung (32) ausgebildet ist, dass sie eine Kaskade von Warnsignalen abhängig von einem Gefahrenmaß der durch das durch das Abbiegen des Fahrzeugs (1) oder des Fahrzeugzugs im Hinblick auf das erfasste stationäre Objekt (4) erzeugt.

10. Vorrichtung nach Anspruch 9, **dadurch gekennzeichnet, dass** die Warnsignale optische Signale mit jeweils unterschiedlichen Farben und/oder akustische Signale mit jeweils unterschiedlichen Tönen und/oder Tonfolgen sind.

11. Fahrzeug mit einer Vorrichtung nach einem der vorhergehenden Ansprüche.

**Claims**

1. Device for warning a vehicle driver of a vehicle (1) or vehicle/trailer combination about a stationary object (4), which device includes at least the following:

a) a sensor device (6) having a detection area (8) comprising a lateral detection area (16) that is arranged on a side (14) of the vehicle and extends from a vehicle front (10) to a vehicle rear (20) as viewed in the direction of a longitudinal centreline (34) of the vehicle (1) or vehicle/trailer combination, the said sensor device (6) being designed to detect a stationary object (4) within the detection area (8),

b) a control device (30) that collaborates with the sensor device (6) and is designed to evaluate the signals of the sensor device (6) in relation to stationary objects (4) detected within the detection area (16), and to define a dynamically variable warning area (A_info) that is smaller than the lateral detection area (16) or at most equal to it,

c) a warning device (32) actuated by the control device (30) in such manner that it produces a warning signal to warn the vehicle driver, only if the sensor device (6) detects a stationary object (4) in the dynamically variable warning area (A_info),

**characterised in that**

d) the control device (30) is furthermore designed so that when a stationary object (4) is detected within the lateral detection area (16) and if it is detected that the vehicle (1) or vehicle/trailer combination is turning toward that vehicle side (14) on which the lateral detection area (16) is located, it assigns a triangular cross section to the dynamically variable warning area (A_info), such that

d1) a first corner (36) of the triangular cross section is arranged at the front edge or at a front wheel (44) of that vehicle side (14) of the vehicle (1) or vehicle/trailer combination, a second corner (38) of the triangular cross section is arranged at the rear edge or at a rear wheel (48) of that vehicle side (14) of the vehicle (1) or vehicle/trailer combination, and a third corner (40) of the triangular cross section is arranged on a line that is perpendicular to the longitudinal centreline (34) of the vehicle (1) or of the vehicle/trailer combination and extends laterally outward from the first corner (36), so that

d2) a distance (dy_info) between the first corner (36) and the third corner (40), as viewed perpendicularly to the longitudinal centreline (34) of the vehicle (1) or vehicle/trailer combination, is calculated as a function of

- the length (l_truck) of the vehicle (1) or vehicle/trailer combination, and
- the position (dx) of the stationary object (4) detected, as viewed parallel to the longitudinal centreline (34) of the vehicle (1) or vehicle/trailer combination, and
- a calculated notional radius (r) such that the vehicle (1) or vehicle/trailer combination can still continue moving at its speed (v_ego) during turning without exceeding a maximum permitted transverse acceleration (a_lat_max) during this, or
- an actual radius (r) that the vehicle (1) or the vehicle/trailer combination actually travels around when turning and that is determined on the basis of the speed (v_ego) prevailing when the vehicle (1) or vehicle/trailer combination is turning and the transverse acceleration (a_lat) of the vehicle (1) or vehicle/trailer combination at that time.

2. Device according to Claim 1, **characterised in that** the control device (30) is furthermore designed to calculate the radius (r) according to the following equation:

$$r = v\_ego^2 / a\_lat\_max,$$

or to calculate the radius (r) according to the following equation:

$$r = v\_ego^2 / a\_lat$$

where

- v_ego is the speed of the vehicle (1) or vehicle/trailer combination while turning,
- a_lat_max is the maximum permitted transverse acceleration of the vehicle (1) or vehicle/trailer combination while turning, and
- a_lat is the actual transverse acceleration of the vehicle (1) or vehicle/trailer combination while turning.

3. Device according to Claim 2, **characterised in that** the control device (30) is furthermore designed to calculate a maximum distance (dy_max) between the first corner (36) and the third corner (40) of the triangular cross section, which distance forms an upper limit for the distance (dy_info) between the first corner (36) and the third corner (40) of the triangular cross section, as viewed perpendicularly to the longitudinal centreline (34) of the vehicle (1) or vehicle/trailer combination, according to the following equation:

$$dy\_max = \sqrt{r^2 + l_{truck}^2} - r$$

where

- l_truck is the length of the vehicle (1) or vehicle/trailer combination, and
- r is the radius.

4. Device according to Claim 3, **characterised in that** the control device (30) is furthermore designed to calculate the distance (dy_info) between the first corner (36) and the third corner (40) of the triangular cross section, as viewed perpendicularly to the longitudinal centreline (34) of the vehicle (1) or vehicle/trailer combination, as a function of the detected position (dx) of the stationary object (4), as viewed parallel to the longitudinal centreline (34) of the vehicle (1) or vehicle/trailer combination, according to the following equation:

$$dy\_info = dy\_max * (l\_truck + dx) / l\_truck$$

where

- dy_max is the maximum distance between the first corner (36) and the third corner (40) of the triangular cross section, as viewed perpendicularly to the longitudinal centreline (34) of the vehicle (1),
- dx is the detected position of the stationary object (4) parallel to the longitudinal centreline (34) of the vehicle (1) or vehicle/trailer combination, and
- l_truck is the length of the vehicle (1) or vehicle/trailer combination.

5. Device according to any of the preceding claims, **characterised in that** the sensor device (6) is arranged at the first corner (36).

6. Device according to any of the preceding claims, **characterised in that** the control device (30) is designed to receive signals representing the turning of the vehicle (1) or vehicle/trailer combination.

7. Device according to any of the preceding claims, **characterised in that** the lateral detection area (16) of the detection area (8) is arranged on the side (14) of the vehicle remote from a driver's seat of the vehicle (1).

8. Device according to any of Claims 1 to 6, **characterised in that** the lateral detection area of the detection area (8) is arranged on the side (28) of the vehicle adjacent to the driver's seat of the vehicle.

9. Device according to any of the preceding claims, **characterised in that** the warning device (32) is designed to produce a cascade of warning signals as a function of a hazard level that results from the turning of the vehicle (1) or vehicle/trailer combination toward the stationary object (4) detected.

10. Device according to Claim 9, **characterised in that** the warning signals are visual signals with respective different colours, and/or acoustic signals with respective different sounds and/or sound sequences.

11. Vehicle incorporating a device according to any of the preceding claims.

**Revendications**

1. Système d'avertissement d'un conducteur d'un véhicule (1) ou d'un train de véhicules de la présence d'un objet (4) immobile, comportant au moins ce qui suit :

a) un dispositif (6) de capteur ayant une région (8) de détection, qui comprend une région (16) de détection latérale, disposée latéralement à un côté (14) du véhicule et s'étendant, considérée dans la direction d'un axe (34) médian longitudinal du véhicule (1) ou du train de véhicules, d'un avant (10) du véhicule à un arrière (20) du véhicule, le dispositif (6) de capteur étant constitué pour pouvoir détecter un objet (4) immobile dans la région (8) de détection,

b) un dispositif (30) de commande, qui coopère avec le dispositif (6) de capteur et qui est constitué de manière à exploiter les signaux du dispositif (6) de capteur en ce qui concerne des objets (4) immobiles détectés dans la région (16) de détection et à fixer une région (A_info) d'avertissement modifiable dynamiquement, qui est plus petite que la région (16) de détection latérale ou qui est au maximum égale à celle-ci,

c) un dispositif (32) d'avertissement, qui est commandé par le dispositif (30) de commande de manière à ne produire, pour avertir le conducteur du véhicule, un signal d'avertissement que si un objet (4) immobile est détecté par le dispositif (6) de capteur dans la région (A_info) d'avertissement modifiable dynamiquement, **caractérisé en ce que**

d) le dispositif (30) de commande est constitué, en outre, de manière, lors d'une détection d'un objet (4) immobile dans la région (16) de détection latérale ou lorsqu'il est détecté que le véhicule (1) ou le train de véhicules tourne vers le côté (14) du véhicule, où se trouve la région (16) de détection latérale, à affecter une section transversale triangulaire à la région (A_info) d'avertissement modifiable (dynamiquement, dans lequel

d1) un premier sommet (36) de la section transversale triangulaire est sur le bord avant ou sur une roue (44) avant de ce côté (14) du véhicule (1) ou du train de véhicules, un deuxième sommet (38) de section transversale triangulaire est sur le bord arrière ou sur une roue (48) arrière de ce côté (14) du véhicule (1) ou du train de véhicules, et un troisième sommet (40) de cette section transversale triangulaire est sur une ligne, qui est perpendiculaire à l'axe (34) médian longitudinal du véhicule (1) ou du train de véhicules et s'étend du premier sommet (36) latéralement vers l'extérieur, dans lequel

d2) une distance (dy_info), entre le premier sommet (36) et le troisième sommet (40), considérée perpendiculairement à l'axe (34) médian longitudinal du véhicule (1) ou du train de véhicules, est calculée en fonction

- de la longueur (l_truck) du véhicule (1) ou du train de véhicules, et
- de la position (dx) de l'objet (4) immobile détectée, considérée parallèlement à l'axe (34) médian longitudinal du véhicule (1) ou du train de véhicules, et
- d'un rayon (r) fictif, que le véhicule (1) ou le train de véhicules peut parcourir encore à la vitesse (v_ego) régnant lorsqu'il tourne, sans pour autant dépasser une accélération (a_lat_max) transversale autorisée au maximum, ou
- est calculée à partir d'un rayon (r) réel, que le véhicule (1) ou le train de véhicules parcourt réellement lorsqu'il tourne, et qui est déterminée en fonction de la vitesse (v_ego) régnant lorsque le véhicule (1) ou le train de véhicules tourne et de l'accélération (a_lat) transversale régnant alors du véhicule (1) ou du train de véhicules.

2. Système suivant la revendication 1, **caractérisé en ce que** le dispositif (30) de commande est constitué, en outre, de manière à calculer le rayon (r) selon la prescription de calcul suivante :

$$r = v\_ego^2 / a\_lat\_max,$$

ou **en ce qu'**il calcule le rayon (r) selon la prescription de calcul suivante :

$$r = v\_ego^2 / a\_lat$$

dans lesquelles

- v_ego est la vitesse du véhicule (1) ou du train de véhicules lorsqu'il tourne, et
- a_lat_max est l'accélération transversale autorisée au maximum du véhicule (1) ou du train de véhicules lorsqu'il tourne,
- a_lat est l'accélération transversale réelle du véhicule (1) ou du train de véhicules lorsqu'il tourne.

3. Système suivant la revendication 2, **caractérisé en ce que** le dispositif (30) de commande est constitué, en outre, de manière à calculer une distance (dy_max) maximum entre le premier sommet (36) et le troisième sommet (40) de la section transversale triangulaire, qui forme une limite supérieure de la distance (dy_info) entre le premier sommet (36) et le troisième sommet (40) de la section transversale triangulaire, considérée perpendiculairement à l'axe (34) médian longitudinal du véhicule (1) ou du train de véhicules, selon la prescription de calcul suivante :

$$\mathrm{dy\_max} + \sqrt{r^2} + l\,\frac{2}{truck} - r$$

dans laquelle

    - l_truck est la longueur du véhicule (1) ou du train de véhicules
    - r est le rayon.

4. Système suivant la revendication 3, **caractérisé en ce que** le dispositif (30) de commande est constitué, en outre, de manière à calculer la distance (dy_info) entre le premier sommet (36) et le troisième sommet (40) de la section transversale triangulaire, considérée perpendiculairement à l'axe (34) médian longitudinal du véhicule (1) ou du train de véhicules, en fonction de la position (dx) détectée de l'objet (4) immobile, considérée parallèlement à l'axe (34) médian longitudinal du véhicule (1) ou du train de véhicules, selon la prescription de calcul suivante :

$$\mathrm{dy\_info = dy\_max * (l\_truck + dx)/l\_truck}$$

dans laquelle

    - dy_max est la distance maximum entre le premier sommet (36) et le troisième sommet (40) de la section transversale triangulaire, considérée perpendiculairement à l'axe (34) médian longitudinal du véhicule (1), et
    - dx est la position détectée de l'objet (4) immobile parallèlement à l'axe (34) médian longitudinal du véhicule (1) ou du train de véhicules, et
    - l_truck est la longueur du véhicule (1) ou du train de véhicules.

5. Système suivant l'une des revendications précédentes, **caractérisé en ce que** le dispositif (6) de capteur est disposé au premier sommet (36).

6. Système suivant l'une des revendications précédentes, **caractérisé en ce que** le dispositif (30) de commande est constitué de manière à pouvoir recevoir des signaux représentant que le véhicule (1) ou le train de véhicules tourne.

7. Système suivant l'une des revendications précédentes, **caractérisé en ce que** la région (16) de détection latérale de la région (8) de détection est disposée latéralement au côté (14) du véhicule, qui représente le côté du véhicule loin du siège du conducteur du véhicule (1).

8. Système suivant l'une des revendications 1 à 6, **caractérisé en ce que** la région de détection latérale de la région (8) de détection est disposée latéralement au côté (28) du véhicule, qui représente le côté du véhicule tourné vers le siège du conducteur du véhicule.

9. Système suivant l'une des revendications précédentes, **caractérisé en ce que** le dispositif (32) d'avertissement est constitué de manière à produire une cascade de signaux d'avertissement en fonction d'un degré de danger provoqué par le fait que le véhicule (1) ou le train de véhicules tourne, au vu de l'objet (4) immobile détecté.

10. Système suivant la revendication 9, **caractérisé en ce que** les signaux d'avertissement sont des signaux optiques ayant chacun des couleurs différentes et/ou des signaux acoustiques ayant chacun des tonalités et/ou des successions de tonalité différentes.

11. Véhicule ayant un système suivant l'une des revendications précédentes.

FIG.1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009041555 A1
- EP 1533776 A2